(19) **Europäisches Patentamt / European Patent Office / Office européen des brevets**

(11) **EP 2 738 103 B1**

(12) **FASCICULE DE BREVET EUROPEEN**

(45) Date de publication et mention
de la délivrance du brevet:
**07.11.2018 Bulletin 2018/45**

(51) Int Cl.:
**B64G 1/00** $^{(2006.01)}$ **B64G 1/24** $^{(2006.01)}$

(21) Numéro de dépôt: **13194951.3**

(22) Date de dépôt: **28.11.2013**

(54) **Procédé et système de mise à poste d'un satellite**

Verfahren und System zum Einbringen eines Satelliten in einen Orbit

Method and system for inserting a satellite into orbit

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2012 FR 1203243**

(43) Date de publication de la demande:
**04.06.2014 Bulletin 2014/23**

(73) Titulaire: **Thales
92400 Courbevoie (FR)**

(72) Inventeur: **Dargent, Thierry
06810 AURIBEAU-SUR-SAIGNE (FR)**

(74) Mandataire: **Priori, Enrico
Marks & Clerk France
Immeuble "Visium"
22, avenue Aristide Briand
94117 Arcueil Cedex (FR)**

(56) Documents cités:
**EP-A2- 1 076 005     US-B1- 6 845 950
US-B1- 7 246 775**

**Description**

La présente invention concerne la mise à poste ou le transfert d'orbite pour des satellites utilisant des moteurs de faible poussée et dont la mise à poste ou le transfert d'orbite est réalisé par un nombre de révolutions d'orbite important. Ces moteurs de faible puissance sont, par exemple, des moteurs, dont l'ionisation du gaz propulseur est effectuée de manière électrique. Ces moteurs sont aussi connus, dans l'état de la technique, sous le nom de moteurs électriques. Les moteurs dont l'ionisation du gaz propulseur est effectuée de manière chimique sont eux connus, dans l'état de la technique, sous le nom de moteurs chimiques.

Ces moteurs électriques permettent de limiter la masse de carburant nécessaire pour effectuer l'opération de transfert d'orbite du satellite. Cependant, ces moteurs étant de très faible puissance, ils présentent comme inconvénient un allongement de un à deux ordres de grandeur du temps de mise en poste ou de transfert d'orbite par rapport à l'utilisation de moteurs chimiques.

Du fait de cette faible puissance et de l'allongement du temps de transfert ou de mise en poste, les méthodes de commande, qui déterminent la loi de poussée du moteur (direction et amplitude en fonction du temps), utilisées pour les moteurs chimiques, ne sont pas applicables pour les moteurs électriques. Les documents US 7246775, US 6845950, EP 1076005 décrivent trois exemples de systèmes permettant de contrôler de manière autonome un changement d'orbite.

Les méthodes de commande des moteurs électriques, connues dans l'état de la technique, sont, soit réalisables dans le satellite sans être optimales, soit optimales mais nécessitent des opérations effectuées au sol importantes, et rapprochées dans le temps. De plus, dans le cas de l'utilisation de ces méthodes, tout arrêt du procédé de commande ou tout arrêt du moteur implique de recommencer le calcul et de replanifier l'ensemble des opérations de commande.

Les méthodes de commande, réalisées dans le satellite, sont basées sur une simplification importante du procédé de commande et font le choix d'une structure de commande figée, avec la plupart du temps un type d'orbite figé. Par exemple, l'utilisation d'une orbite de départ fortement excentrique synchrone et une loi de commande figée inertielle. De même, d'autres méthodes proposent d'utiliser une structure de commande figée pour des transferts vers des orbites géostationnaires standards (connu aussi sous l'acronyme anglais de GTO pour Geostationary Transfer Orbit). Par la limitation des degrés de liberté fixés par la structure imposée de la commande la détermination de la loi de commande est sous-optimale. C'est pourquoi, les méthodes de commande figées s'écartent par construction de la loi de commande optimale qui aurait pu être déterminée en continu. Elles sont donc plus coûteuses en carburant et ne sont pas plus robustes aux perturbations et demandent donc la replanification régulière des paramètres de commande.

L'invention propose donc un procédé pouvant être réalisé à bord du satellite (en particulier ayant des besoins en ressources de mémoire et de calcul compatibles avec les performances d'un satellite). Ce procédé permet de déterminer la loi de commande optimale quelque soit l'orbite de départ et d'arrivée du satellite. La méthode de commande est robuste aux interruptions de mission, telles que l'interruption du pilotage pour maintenance, des pannes, etc.. La méthode de commande est capable de corriger automatiquement en boucle fermée la loi de commande optimale, avec des calculs simples et sans re-programmation depuis le sol. Enfin, cette solution permet la réalisation d'un transfert autonome d'orbite et est adapté à l'utilisation de moteurs électriques.

A cet effet, l'invention a pour objet un procédé de mise à poste d'un satellite caractérisé en ce qu'il comporte une première étape de détermination d'une trajectoire prédéfinie utilisée pour ladite mise à poste dudit satellite à partir d'un modèle du mouvement dudit satellite et une deuxième étape de détermination des paramètres de la loi de commande prédéfinie d'approximation de ladite trajectoire prédéfinie et par minimisation de l'impact sur ladite loi de commande prédéfinie d'un écart d'une trajectoire suivie par ledit satellite utilisant cesdits paramètres de la loi de commande prédéfinie. De plus la méthode comporte aussi les étapes itératives suivantes : une troisième étape de détermination d'un vecteur d'état du satellite, une quatrième étape de détermination d'un écart entre ledit vecteur d'état du satellite et ladite trajectoire prédéfinie une cinquième étape de détermination de multiplicateurs de Lagrange à partir d'un vecteur d'état actuel dudit satellite, d'un écart entre ledit vecteur d'état actuel et la trajectoire prédéfinie et desdits paramètres de la loi de commande prédéfinie une sixième étape de détermination de détermination des paramètres de la loi de commande actuelle des moteurs à partir desdits multiplicateurs de Lagrange et par dérivation d'un paramètre représentatif d'un effet des moteurs sur ladite trajectoire réelle et une septième étape de commande des moteurs à partir desdits paramètres de la loi de commande actuelle

Un vecteur d'état permet de caractériser un système dynamique sous forme vectorielle en utilisant des variables d'état. Les variables d'état, à un instant donné, sont des grandeurs, qui définissent complètement l'état du système dynamique à cet instant. Ces grandeurs ont le plus souvent une signification physique. La connaissance du vecteur d'état à un instant t quelconque permet de connaître l'état sur un intervalle $[t, t + T]$, par intégration par rapport au temps entre $t$ et $t + T$ de la dynamique du vecteur d'état. $T$ est une variable arbitraire. Le nombre de variables d'état, désigné par la lettre $n$, est la dimension du système.

L'invention propose une méthode efficace et robuste pour réaliser à bord d'un satellite la loi de commande prédéfinie minimisant le temps de trajet ou la consommation de carburant durant la mise en poste ou le transfert d'orbite du satellite. La réalisation proposée est optimale dans le sens ou la performance de la loi réalisée est équivalente à la loi théorique. Les ressources, en termes de quantité de mémoire disponible et de puissance de calcul nécessaires au fonctionnement du procédé, sont faibles par rapport aux ressources informatiques des satellites actuels. La méthode est dite robuste, car elle supporte les aléas de mission sans nécessité de reprogrammation et supporte des interruptions de la mission Pour cela la méthode réalise un mécanisme en boucle fermée d'adaptation permanente de la loi de commande prédéfinie en fonction de l'écart à la trajectoire nominale.

Avantageusement les paramètres de la loi de commande prédéfinie et/ou la trajectoire prédéfinie sont stockés sous la forme d'une représentation polynomiale.

Avantageusement la première étape et/ou la deuxième étape de détermination utilisent un modèle moyenné du mouvement dudit satellite.

Avantageusement ladite première étape est adaptée pour utiliser un modèle cartésien du mouvement dudit satellite.

Avantageusement ladite première étape est adaptée pour utiliser un modèle képlérien du mouvement dudit satellite.

Avantageusement ladite première étape est adaptée pour utiliser un modèle équinoxial du mouvement dudit satellite.

L'invention concerne aussi un satellite comportant au moins un moteur et des moyens de commande de moteur adaptés pour mettre en oeuvre le procédé décrit dans l'invention.

L'invention sera mieux comprise et d'autres avantages apparaîtront à la lecture de la description détaillée des modes de réalisation donnés à titre d'exemple sur les figures suivantes.

la figure 1, présente le procédé selon un aspect de l'invention
la figure 2 présente les différents paramètres utilisés dans la représentation du mouvement du satellite
la figure 3 présente l'évolution d'un paramètre $\lambda_{ex}(t)$
la figure 4 présente l'évolution d'un paramètre $p$

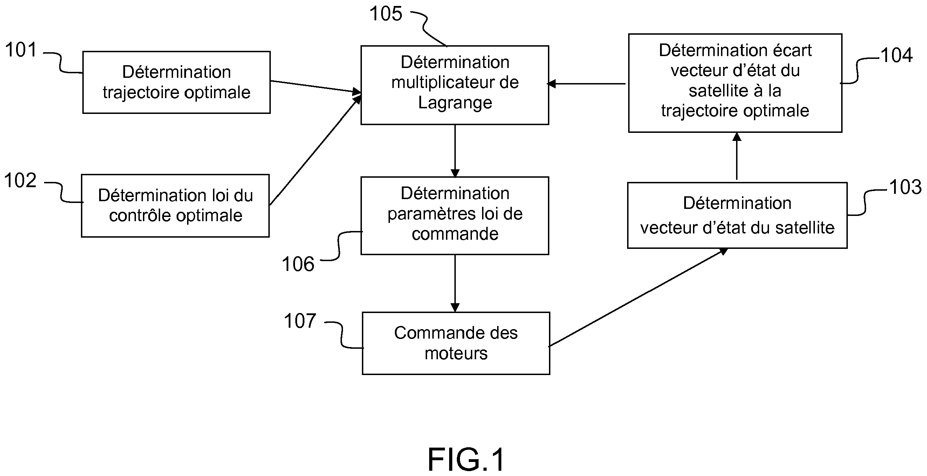

Le procédé, tel que présenté figure 1, peut utiliser différents modèles de l'évolution spatiale du satellite.

Un premier modèle utilise une représentation cartésienne. Une représentation cartésienne est une représentation en position et en vitesse. Ce premier modèle utilise les équations suivantes :

$$\frac{d^2\vec{r}}{dt^2} = -\mu\frac{\vec{r}}{r^3} + \frac{F}{m}\vec{\beta} + \frac{\vec{F}_{perturbatrice}}{m}$$
$$\frac{dm}{dt} = -\frac{F}{g_0 \times I_{sp}}$$

Dans ces équations les différentes variables représentent les éléments suivants :

$\vec{r}$ rayon vecteur du satellite par rapport au centre Terre en mètres
$\vec{\beta}$ vecteur des cosinus directeurs de la poussée.
$F$ poussée du moteur ($F \geq 0$) en Newtons
$I_{sp}$ impulsion spécifique du moteur en secondes
$m$ masse du satellite en kilogrammes
$\mu$ Constante gravitationnelle 3,986005 E+14 m3/s2 pour la Terre
$g_0$ Accélération terrestre normalisée 9.80665 m/s2
$\vec{F}_{perturbatrice}$ ensemble des forces perturbatrices affectant la trajectoire du satellite en Newtons

Les forces perturbatrices, agissant sur le satellite, interviennent au second ordre dans les modifications de la trajectoire du satellite. Dans un premier temps, leurs actions sont donc négligées et traité comme des perturbations par le contrôle en boucle fermé.

En notant la vitesse $\frac{d\vec{r}}{dt} = \vec{v}$ les équations de la dynamique du satellite peuvent s'écrire sous la forme d'un système d'équation différentielle non linéaire du 1er ordre :

$$\begin{cases} \dfrac{d\vec{r}}{dt} = \vec{v} \\ \dfrac{d\vec{v}}{dt} = -\mu\dfrac{\vec{r}}{r^3} + \dfrac{F}{m}\vec{\beta} + \dfrac{\vec{F}_{perturbatrice}}{m} \\ \dfrac{dm}{dt} = -\dfrac{F}{g_0 \times I_{sp}} \end{cases}$$

On note $\begin{bmatrix} \vec{r} \\ \vec{v} \\ m \end{bmatrix}$ le vecteur d'état du système qui permet d'avoir une représentation cartésienne de la dynamique du satellite.

Un deuxième modèle utilise une représentation képlérienne. Dans ce modèle, l'équation de la dynamique du satellite est transformée pour exprimer le mouvement du satellite en termes d'éléments de type képlérien. Ces éléments képlériens sont le demi-grand axe $a$, excentricité $e$, la longitude du périgée $\omega$, la longitude du noeud ascendant $\Omega$ et l'anomalie vraie $v$. Cette modélisation offre l'avantage d'être directement interprétable par l'homme du métier. En effet, elle exprime directement les éléments géométriques de l'orbite du satellite. De plus, cinq des six paramètres sont des intégrales premières du mouvement, ce qui permet une implémentation numérique simple. Le vecteur d'état dans ce jeu de coordonnée est $x = [a,e,i,\omega,\Omega,v,m]$.

Un troisième modèle est le modèle équinoxial. Ce modèle utilise des coordonnées dont les paramètres sont $p$, $e_x$, $e_y$, $h_x$, $h_y$ et $l$ :
$p$ est le paramètre de la conique, $[e_x,e_y]$ représente le vecteur excentricité et $[h_x,h_y]$ le vecteur inclinaison. Le vecteur d'état dans ce jeu de coordonnée est $x = [p,e_x,e_y,h_x,h_y,l,m]$.

Contrairement au modèle képlérien, la dynamique d'état du modèle équinoxial ne présente pas de singularité, tant pour les orbites équatoriales ($i = 0°$) que les orbites polaires ($i = 90°$). De plus, la dynamique d'état est valable simultanément pour les orbites elliptiques et hyperboliques.

Les paramètres du modèle équinoxial sont exprimés à partir des paramètres képlérien par les équations suivantes :

$$p = a|1 - e^2| \quad \text{en mètres}$$

$$e_x = e \times \cos(\omega + \Omega)$$

$$e_y = e \times \sin(\omega + \Omega)$$

$$h_x = \tan\frac{i}{2}\cos(\Omega)$$

$$h_y = \tan\frac{i}{2}\sin(\Omega)$$

$$l = \omega + \Omega + v \quad \text{en radian}$$

Dans ces équations, les différents éléments représentent :

$a$ le demi-grand axe en mètres
$e$ l'excentricité
$i$ l'inclinaison en radian
$\Omega$ la longitude du noeud ascendant en radian
$\omega$ l'argument du périgée en radian

*v* l'anomalie vraie en radian

En utilisant le modèle équinoxial les équations de la dynamique du satellite sont les équations suivantes :

$$\frac{dp}{dt} = 2 \sqrt{\frac{p^3}{\mu}} \frac{1}{Z} S$$

$$\frac{de_x}{dt} = \sqrt{\frac{p}{\mu}} \frac{1}{Z} \left( Z \times \sin(l) \times Q + A \times S - e_y \times F \times W \right)$$

$$\frac{de_y}{dt} = \sqrt{\frac{p}{\mu}} \frac{1}{Z} \left( -Z \times \cos(l) \times Q + B \times S + e_x \times F \times W \right)$$

$$\frac{dh_x}{dt} = \frac{1}{2} \sqrt{\frac{p}{\mu}} \frac{X}{Z} \cos(l) \times W$$

$$\frac{dh_y}{dt} = \frac{1}{2} \sqrt{\frac{p}{\mu}} \frac{X}{Z} \sin(l) \times W$$

$$\frac{dl}{dt} = \sqrt{\frac{\mu}{p^3}} Z^2 + \sqrt{\frac{p}{\mu}} \frac{1}{Z} \times F \times W$$

$$\frac{dm}{dt} = -\frac{T}{g_0 \times I_{sp}}$$

Dans ces équations, les différents paramètres sans unités sont définis par :

$$Z = 1 + e_x \cos(l) + e_y \sin(l)$$

$$A = e_x + (1 + Z) \cos(l)$$

$$B = e_y + (1 + Z) \sin(l)$$

$$F = h_x \sin(l) - h_y \cos(l)$$

$$X = 1 + h_x{}^2 + h_y{}^2$$

et *Q, S* et *W* sont les composantes radiale, tangentielle et normale de l'accélération délivrée par le moteur et/ou les forces perturbatrices.

La dynamique du satellite évoluant lentement à cause de la faible poussée des moteurs, il est intéressant de regarder la dynamique en paramètre d'état moyen sur une orbite au lieu de s'occuper des paramètres d'état instantané comme dans les équations précédentes.

L'opération de moyennation s'effectue avec la formule suivante :

$$\bar{\dot{x}} = \bar{f} = \frac{1}{T} \int\limits_0^T f(x, u^*) dt = \frac{1}{T} \int\limits_0^{2\pi} f(x, u^*) \frac{1}{\left(\frac{dl}{dt}\right)} dl$$

$$T = \int\limits_0^{2\pi} \frac{1}{\left(\frac{dl}{dt}\right)} dl$$

où $f$ est la dynamique satellite fonction de l'état $x$ et du control $u^*$ et $T$ la période de l'orbite. La moyennation permet d'obtenir une représentation plus lisse des paramètres de l'orbite qui sont plus facilement représentable par des polynômes

Le procédé de commande, présenté figure 1, comporte une première étape 101 de détermination de la trajectoire prédéfinie. Cette détermination est réalisée en utilisant la théorie du contrôle optimal en appliquant le principe du maximum, sur un des modèles de la dynamique du satellite. Cette application du principe du maximum permet de calculer la trajectoire optimale suivant le critère d'optimalité retenu : classiquement trajectoire en temps minimum ou trajectoire à duré fixé et en consommation de carburant minimum. Cette étape permet d'obtenir une trajectoire prédéfinie optimale fonction d'un temps $t$, dont le paramètre représentatifs sont $x_{ref}(t)$ et $\lambda_{ref}(t)$. $x_{ref}(t)$ est le vecteur d'état de la dynamique satellite (par exemple $x_{ref}(t) = [p(t), e_x(t), e_y(t), h_x(t), h_y(t), l(t), m(t)]$ $\lambda_{ref}(t)$ et sont les multiplicateurs de Lagrange associé au vecteur d'état en application du principe du minimum (par exemple

$$\lambda_{\mathrm{ref}}(t) = \Big[\lambda_{\mathrm{p}}(t), \lambda_{\mathrm{e}_{\mathrm{x}}}(t), \lambda_{\mathrm{e}_{\mathrm{y}}}(t), \lambda_{\mathrm{h}_{\mathrm{x}}}(t), \lambda_{\mathrm{h}_{\mathrm{y}}}(t), \lambda_{\mathrm{l}}(t), \lambda_{\mathrm{m}}(t)\Big]\Big).$$

Le procédé comporte aussi une deuxième étape 102 de détermination des paramètres de la loi de commande prédéfinie. Cette détermination est réalisée par le calcul de la matrice de sensibilité $A(t) = \frac{\partial \lambda(t)}{\partial x}$. Cette matrice représente la sensibilité de l'état adjoint de référence $\lambda$ par rapport à l'état le long de la trajectoire optimale de référence.

La détermination de ces données de référence est réalisée, par exemple, en utilisant le principe du maximum de Pontriaguine. Ce principe permet une optimisation des systèmes continus avec des fonctions à variables d'état définies à l'instant final et à un temps final spécifié ou non.(incluant le problème en temps minimum).

On note $\Psi$ la fonction de contrainte de l'état final (l'orbite cible) :

$$\Psi\big[x(t_f), t_f\big] = 0$$

On note $\bar{J}$ la fonction de coût augmentée des contraintes :

$$\bar{J} = \Phi\big[x(t_f), t_f\big] + \nu^T \Psi\big[x(t_f), t_f\big] + \int_{t_0}^{t_f} L[x, u, t] + \lambda^T(f(x, u, t) - \dot{x}) dt$$

Dans cette équation les paramètres sont les suivants :

$\Phi$ la fonction de coût terminal, par exemple $\Phi = m$ si on optimise la consommation de carburant et $\Phi = 0$ si on optimise le temps de trajet.

$L$ la fonction de coût le long de la trajectoire, par exemple $L = 0$ si on optimise la consommation de carburant et $L = 1$ si on optimise le temps de trajet.

*f* la dynamique satellite dépendant de l'état *x* du contrôle *u* et du temps *t*. Le contrôle *u* est composé de 3 paramètres déterminant la poussée du moteur (par exemple la direction de poussée et un booléen qui contrôle l'allumage du moteur)

*v* le multiplicateur de Lagrange associé à la contrainte $\Psi$

$\lambda$ le multiplicateur de Lagrange associé à la dynamique

On note aussi *H* l'hamiltonien du problème $H = \lambda^T \times f$. Les conditions nécessaires pour rendre le problème optimal (c'est à dire que $\overline{J}$ soit un extremum) est que la différentiel de $\overline{J}$ soit nulle ($\partial \overline{J} = 0$).

Cela donne après calcul les équations suivantes :

$$\dot{x} = f(x, u, t)$$

avec *x*($t_0$) donné et $t_0 \leq t \leq t_f$

$$\dot{\lambda} = -\left(\frac{\partial f}{\partial x}\right)^T \lambda - \left(\frac{\partial L}{\partial x}\right)^T$$

si l'on utilise une dynamique d'état moyenné sur une orbite les équations sont :

$$\bar{\dot{x}} = \bar{f} = \frac{1}{T}\int_0^T f(x, u^*) dt = \frac{1}{T}\int_0^{2\pi} f(x, u^*) \frac{1}{\left(\frac{dl}{dt}\right)} dl$$

$$\dot{\bar{\lambda}}^T = -\frac{1}{T}\int_0^{2\pi} \bar{\lambda}^T \frac{\partial f}{\partial x} \frac{1}{\left(\frac{dl}{dt}\right)} dl + \frac{1}{T}\int_0^{2\pi} \frac{\partial\left(\frac{dl}{dt}\right)}{\partial x} \frac{\bar{\lambda}^T f}{\left(\frac{dl}{dt}\right)^2} dl - \frac{1}{T}\int_0^{2\pi} \frac{\partial\left(\frac{dl}{dt}\right)}{\partial x} \frac{\bar{\lambda}^T f}{\left(\frac{dl}{dt}\right)^2} dl \times \bar{\lambda}^T \bar{f}$$

$$T = \int_0^{2\pi} \frac{1}{\left(\frac{dl}{dt}\right)} dl$$

Ces équations représentent les équations de la dynamique de l'état et de l'état adjoint du système.

$$\frac{\partial H}{\partial u} = \left(\frac{\partial f}{\partial u}\right)^T \lambda + \left(\frac{\partial L}{\partial u}\right)^T = 0$$

La solution de cette équation donne au cours du temps la commande *u*(*t*). Si *H* n'est pas différentiable par rapport à un ou des paramètres de contrôle : par exemple $\delta$ un booléen qui contrôle l'allumage du moteur alors l'équation ci dessus est remplacé par $\max_\delta(H(\delta = 0), H(\delta = 1))$.

$$x_k(t_0) \text{ donné à } t_0 \text{ ou } \lambda_k(t_0) = 0$$

$$\lambda(t_f) = \left(\frac{\partial\phi}{\partial x} + v^T \frac{\partial\Psi}{\partial x}\right) \text{ donné à } t_f$$

$$\left[ \frac{\partial \phi}{\partial t} + v^T \frac{\partial \Psi}{\partial t} + \left( \frac{\partial \phi}{\partial x} + v^T \frac{\partial \Psi}{\partial x} \right) f + L \right]_{t=t_f} = 0 \; si \; t_f \; est \; libre$$

Ces équations représentent les conditions aux limites.

La résolution du problème de contrôle optimale suivant le principe du maximum de Pontryagin est réalisée en résolvant les équations précédentes.

Une troisième étape 103 permet de déterminer le vecteur d'état du satellite. Cette détermination peut être réalisée par l'utilisation d'un récepteur de localisation satellitaire (connu aussi sous l'expression anglais de GPS pour Global Positioning System) ou d'un propagateur d'orbite bord Un propagateur bord donne le vecteur d'état du satellite au cours du temps à partir d'un modèle d'évolution du satellite implémenté dans le calculateur bord. Un propagateur bord est initialisé par télécommande d'une station au sol. Ce propagateur d'orbite utilise un modèle précis de la dynamique d'orbite du satellite et peut être couplé éventuellement à une centrale inertielle placée à bord du satellite.

Enfin, une quatrième étape 104 permet de déterminer un écart entre le vecteur d'état du satellite et la trajectoire prédéfinie obtenue de l'étape 101. Ce calcul d'écart est réalisé par projection de l'état du satellite sur la trajectoire prédéfinie et par le calcul de l'écart avec cette trajectoire prédéfinie. Ce calcul est réalisé en minimisant une norme, de l'écart entre l'état et l'état de référence. Les normes classiquement utilisé sont la norme L1 ($\sum |x_i - x_{i \; refl}|$) ou l'écart quadratique : la norme L2 ($\sum (x_i - x_{i \; ref})^2$).

Le procédé comporte aussi une cinquième étape 105 de détermination des multiplicateurs de Lagrange $\lambda(t)$. Cette détermination est réalisée à partir du vecteur d'état actuel, de l'écart entre le vecteur d'état actuel et la trajectoire prédéfinie déterminée dans l'étape 101 et des paramètres de la loi de commande prédéfinie déterminés dans l'étape 102. Cette détermination est réalisée en utilisant l'équation :

$$\lambda(t) = \lambda_{ref}(t) + A(t) \times \left( x(t) - x_{ref}(t) \right)$$

Le procédé comporte ensuite une sixième étape 106 de détermination des paramètres de la loi de commande des moteurs. Cette détermination est effectuée par résolution de l'équation sur le contrôle issue de la théorie du contrôle optimale à partir de l'état $x(t)$ des multiplicateurs de Lagrange $\lambda(t)$. Le contrôle maximise à tout instant l'hamiltonien du problème. Les paramètres de la loi de commande des moteurs comprennent :

- la direction de la poussée du moteur, la maximisation de l'hamiltonien par rapport à la direction de poussée obtenue par résolution de l'équation suivante :

$$\frac{\partial H}{\partial u} = \left( \frac{\partial f}{\partial u} \right)^T \lambda + \left( \frac{\partial L}{\partial u} \right)^T = 0$$

- Le paramètre d'allumage du moteur $\delta$, obtenu par la résolution de l'équation suivante :

$$\max_{\delta} \left( H(\delta = 0), H(\delta = 1) \right)$$

$\delta$ représente le booléen déterminant si le moteur est allumé ($\delta = 1$) ou éteint ($\delta = 0$)

La sixième étape 106 permet donc d'obtenir la direction de la poussée du moteur, ainsi que la loi d'allumage de cette poussée.

On peut noter que le choix des variables d'états et l'utilisation de technique de filtrage ou moyennation a un impact directe sur la facilité de représentation et la paramétrisation de ces données à bord du satellite et le coût calcul du module d'écartomètrie.

En effet il faut pouvoir stoker à bord le vecteur d'état de la trajectoire de référence, le vecteur d'état adjoint et la matrice de sensibilité A soit 7+7+ 7*7 = 63 variables discrétisées en temps au pas de temps du calculateur sur la durée du trajet (plusieurs mois) cela représente un stockage mémoire très important et coûteux pour un satellite. Classiquement on remplace ces tableaux de données par une représentation polynomiale fonction du temps de ces variables il suffit alors de ne stocker que les coefficients du polynôme (quelques dizaine de valeur en fonction de l'ordre du polynôme).

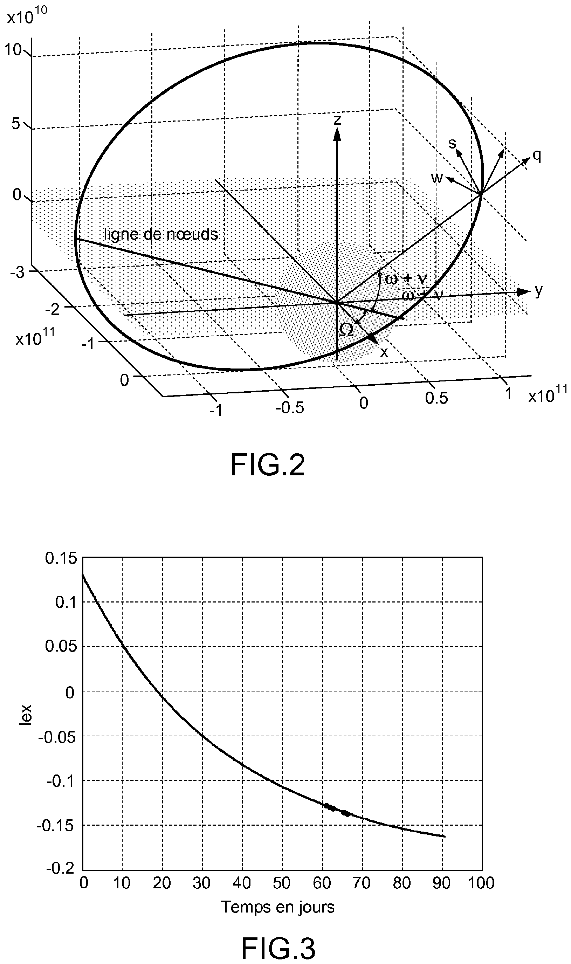

La courbe de la figure 3 qui représente le paramètre $\lambda_{ex}$ moyenné possède une représentation polynomiale

de la forme

$$\lambda(t) = 1532774 * t^6 6 + 18727,26 * t^5 - 28021,34 * t^4 - 3133,043 * t^3 + 792,0076 * t^2 - 189,1362 * t + 18,59838$$

avec un coefficient de corrélation extrêmement proche de 1 : R2 = 0,9999190 ce polynôme est une très bonne approximation de $\lambda_{ex}$ sur toute la durée du trajet. Sept coefficients suffisent à le représenté.

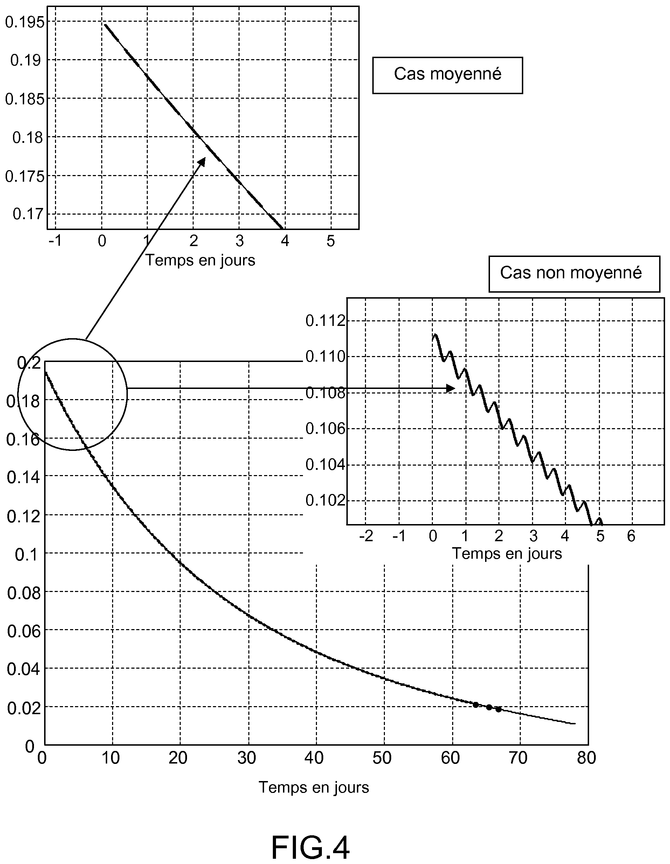

Par contre si la dynamique n'est pas moyennée la représentation polynomiale devient plus difficile. La figure 4 donne un aperçu du problème sur l'évolution du paramètre *p* pour un transfert 200x35786 km, i = 7° vers l'orbite géostationnaire le zoom sur le démarrage de la trajectoire donne l'évolution de *p* avec ou sans moyennation préalable.

Dans le cas d'une représentation classique sans moyennation préalable un unique polynôme ne permet pas de représenté *p* correctement sur toute la trajectoire car la solution du problème est oscillante en pratique, il va falloir décomposer la trajectoire en petit bout et utiliser une modélisation basé sur un polynôme par oscillation.

D'autre part, la recherche de la distance minimum du paramètre *p* courant par rapport au paramètre *p* nominal est compliqué par le risque de voir apparaître plusieurs minimum locaux donc plusieurs solutions.

Ensuite, une septième étape 107 permet de commander les moteurs, en utilisant les paramètres de la loi de commande actuelle obtenus durant la sixième étape. Cette commande des moteurs permet de provoquer le déplacement du satellite. Ce déplacement du satellite, est en plus, impacté par différentes perturbations externes (exemple pression de radiation solaire, harmonique du potentiel terrestre, attraction lunisolaire,...) ou internes (par exemple les erreurs de réalisation sur la poussée du moteur).

Suite à la commande des moteurs, le procédé reboucle alors à la troisième étape 103 de détermination le vecteur d'état du satellite. Le procédé s'arrête lorsque l'orbite cible final est atteinte avec la précision souhaité pour la mission de mise à poste.

Le système implémentant cette méthode est un satellite comportant au moins un moteur. Le procédé de commande des moteurs peut par exemple être mise en oeuvre sur un processeur générique, un processeur dédié, un réseau de porte programmable connus aussi sous le nom anglais de FPGA pour Field Programmable Gate Array.

De plus le procédé peut être disponible en tant que produit programme d'ordinateur sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

**1.** Procédé de mise à poste d'un satellite comportant:

- une première étape (101) de détermination d'une trajectoire prédéfinie utilisée pour ladite mise à poste dudit satellite à partir d'un modèle du mouvement dudit satellite;
- une deuxième étape (102) de détermination des paramètres de la loi de commande prédéfinie d'approximation de ladite trajectoire prédéfinie et par minimisation de l'impact sur ladite loi de commande prédéfinie, d'un écart d'une trajectoire, suivie par ledit satellite utilisant cesdits paramètres de la loi de commande prédéfinie, par rapport à ladite trajectoire prédéfinie ;

**caractérisé en ce que** le procédé comporte les étapes itératives suivantes:

- une troisième étape (103) de détermination d'un vecteur d'état dudit satellite;
- une quatrième étape (104) de détermination d'un écart entre ledit vecteur d'état dudit satellite et ladite trajectoire prédéfinie;
- une cinquième étape (105) de détermination de multiplicateurs de Lagrange à partir d'un vecteur d'état actuel dudit satellite, d'un écart entre ledit vecteur d'état actuel et la trajectoire prédéfinie et desdits paramètres de la loi de commande prédéfinie;
- une sixième étape (106) de détermination des paramètres de la loi de commande actuelle des moteurs à partir desdits multiplicateurs de Lagrange et par dérivation d'un paramètre représentatif d'un effet des moteurs sur ladite trajectoire réelle;
- une septième étape (107) de commande des moteurs à partir desdits paramètres de la loi de commande actuelle.

**2.** Procédé selon la revendication 1 dans lequel lesdits paramètres de ladite loi de commande prédéfinie et/ou ladite trajectoire prédéfinie sont stockés sous la forme d'une représentation polynominale.

**3.** Procédé selon la revendication 1 ou 2 dans lequel ladite première étape et/ou ladite deuxième étape de détermination utilisent un modèle moyenné du mouvement dudit satellite.

**4.** Procédé selon l'une des revendications 1 à 3 dans lequel ladite première étape (101) est adaptée pour utiliser un modèle cartésien du mouvement dudit satellite.

**5.** Procédé selon l'une des revendications 1 à 3 dans lequel ladite première étape (101) est adaptée pour utiliser un modèle képlérien du mouvement dudit satellite.

**6.** Procédé selon l'une des revendications 1 à 3 dans lequel ladite première étape (101) est adaptée pour utiliser un modèle équinoxial du mouvement dudit satellite.

**7.** Satellite comportant au moins un moteur et des moyens de commande de moteur configurés pour:

- déterminer une trajectoire prédéfinie utilisée pour une mise à poste dudit satellite à partir d'un modèle du mouvement dudit satellite;
- déterminer des paramètres de la loi de commande prédéfinie d'approximation de ladite trajectoire prédéfinie et par minimisation de l'impact sur ladite loi de commande prédéfinie, d'un écart d'une trajectoire, suivie par ledit satellite utilisant cesdits paramètres de la loi de commande prédéfinie, par rapport à ladite trajectoire prédéfinie; **caractérisé en ce que** les moyens de commande de moteur sont configurés pour:

- déterminer un vecteur d'état dudit satellite;
- déterminer un écart entre ledit vecteur d'état dudit satellite et ladite trajectoire prédéfinie;
- déterminer des multiplicateurs de Lagrange à partir d'un vecteur d'état actuel dudit satellite, d'un écart entre ledit vecteur d'état actuel et la trajectoire prédéfinie et desdits paramètres de la loi de commande prédéfinie;
- déterminer des paramètres de la loi de commande actuelle des moteurs à partir desdits multiplicateurs de Lagrange et par dérivation d'un paramètre représentatif d'un effet des moteurs sur ladite trajectoire réelle;
- commander des moteurs à partir desdits paramètres de la loi de commande actuelle.

**Patentansprüche**

**1.** Verfahren zum Positionieren eines Satelliten, Folgendes beinhaltend:

- einen ersten Schritt (101) des Bestimmens einer vorbestimmten Bahn, welche für die Positionierung des Satelliten anhand eines Modells der Bewegung des Satelliten verwendet wird;
- einen zweiten Schritt (102) des Bestimmens der Parameter des vorbestimmten Regelgesetzes zur Annäherung der vorbestimmten Bahn und durch Minimierung der Auswirkung auf das vorbestimmte Regelgesetz einer Abweichung einer Bahn, welcher der Satellit folgt, unter Verwendung der Parameter des vorbestimmten Regelgesetzes in Bezug auf die vorbestimmte Bahn;

**dadurch gekennzeichnet, dass** das Verfahren folgende iterativen Schritte beinhaltet:

- einen dritten Schritt (103) des Bestimmens eines Zustandsvektors des Satelliten;
- einen vierten Schritt (104) des Bestimmens einer Abweichung zwischen dem Zustandsvektor des Satelliten und der vorbestimmten Bahn;
- einen fünften Schritt (105) des Bestimmens von Lagrange-Multiplikatoren anhand eines aktuellen Zustandsvektors des Satelliten, einer Abweichung zwischen dem aktuellen Zustandsvektor und der vorbestimmten Bahn und der Parameter des vorbestimmten Regelgesetzes;
- einen sechsten Schritt (106) des Bestimmens der Parameter des aktuellen Regelgesetzes der Motoren anhand der Lagrange-Multiplikatoren und durch Ableitung eines Parameters, der einen Effekt der Motoren auf die Ist-Bahn darstellt;
- einen siebten Schritt (107) des Steuerns der Motoren anhand der Parameter des aktuellen Regelgesetzes.

**2.** Verfahren nach Anspruch 1, bei welchem die Parameter des vorbestimmten Regelgesetzes und/oder die vorbestimmte Bahn in Form einer Polynom-Darstellung gespeichert sind.

**3.** Verfahren nach Anspruch 1 oder 2, bei welchem der erste Schritt und/oder der zweite Schritt des Bestimmens ein gemitteltes Modell der Bewegung des Satelliten verwendet/verwenden.

**4.** Verfahren nach einem der Ansprüche 1 bis 3, bei welchem der erste Schritt (101) geeignet ist, um ein kartesisches Modell der Bewegung des Satelliten zu verwenden.

**5.** Verfahren nach einem der Ansprüche 1 bis 3, bei welchem der erste Schritt (101) geeignet ist, um ein keplersches Modell der Bewegung des Satelliten zu verwenden.

**6.** Verfahren nach einem der Ansprüche 1 bis 3, bei welchem der erste Schritt (101) geeignet ist, um ein Äquinoktial-Modell der Bewegung des Satelliten zu verwenden.

**7.** Satellit, beinhaltend mindestens einen Motor und Motorsteuerungsmittel, welche konfiguriert sind zum:

- Bestimmen einer vorbestimmten Bahn, welche für eine Positionierung des Satelliten anhand eines Modells der Bewegung des Satelliten verwendet wird;
- Bestimmen der Parameter des vorbestimmten Regelgesetzes zur Annäherung der vorbestimmten Bahn und durch Minimierung der Auswirkung auf das vorbestimmte Regelgesetz einer Abweichung einer Bahn, welcher der Satellit folgt, unter Verwendung dieser Parameter des vorbestimmten Regelgesetzes in Bezug auf die vorbestimmte Bahn; **dadurch gekennzeichnet, dass** die Motorsteuerungsmittel konfiguriert sind zum:
- Bestimmen eines Zustandsvektors des Satelliten;
- Bestimmen einer Abweichung zwischen dem Zustandsvektor des Satelliten und der vorbestimmten Bahn;
- Bestimmen der Lagrange-Multiplikatoren anhand eines aktuellen Zustandsvektors des Satelliten, einer Abweichung zwischen dem aktuellen Zustandsvektor und der vorbestimmten Bahn und der Parameter des vorbestimmten Regelgesetzes;
- Bestimmen der Parameter des aktuellen Regelgesetzes der Motoren anhand der Lagrange-Multiplikatoren und durch Ableitung eines Parameters, der einen Effekt der Motoren auf die Ist-Bahn darstellt;
- Steuern der Motoren anhand der Parameter des aktuellen Regelgesetzes.

**Claims**

**1.** A method for stationing a satellite, comprising:

- a first step (101) of determining a predefined trajectory used for said stationing of said satellite based on a model of movement of said satellite;
- a second step (102) of determining parameters of the predefined control law of approximation of said predefined trajectory and minimizing an impact of said predefined control law on a deviation from a trajectory followed by said satellite using said parameters of the predefined control law, with respect to said predefined trajectory; **characterized in that** the method comprises the following iterative steps:

  a third step (103) of determining a state vector of said satellite;
  a fourth step (104) of determining a deviation between said state vector of said satellite and said predefined trajectory;
  a fifth step (105) of determining Lagrange multipliers based on a current state vector of said satellite, on a deviation between said current state vector and the predefined trajectory and on said parameters of the predefined control law;
  a sixth step (106) of determining the parameters of a current control law of engines based on said Lagrange multipliers and by derivation of a parameter representative of an effect of the engines on said real trajectory;
  a seventh step (107) of controlling the engines based on said parameters of the current control law.

**2.** The method according to claim 1, in which said parameters of said predefined control law and/or said predefined trajectory are stored in a form of a polynomial representation.

**3.** The method according to claim 1 or 2, in which said first step and/or said second step of determining use an averaged model of the movement of said satellite.

4.  The method according to one of the claims 1 to 3, in which said first step (101) is configured to use a Cartesian model of the movement of said satellite.

5.  The method according to anyone of the claims 1 to 3, in which said first step (101) is configured to use a Keplerian model of the movement of said satellite.

6.  The method according to claim 1, in which said first step (101) is configured to use an equinoctial model of the movement of said satellite.

7.  A satellite comprising at least one engine and engine control means configured to:

    determine a predefined trajectory used for stationing of said satellite based on a model of movement of said satellite;
    determine parameters of a predefined control law for approximation of said predefined trajectory and by minimizing an impact on said predefined control law for a deviation from a trajectory followed by said satellite using said parameters of the predefined control law, with respect to said predefined trajectory;
    **characterized in that** the engine control means are configured to:

    determine a state vector of said satellite;
    determine a deviation between said state vector of said satellite and said predefined trajectory;
    determine Lagrange multipliers based on a current state vector of said satellite, on a deviation between said current state vector and the predefined trajectory and on said parameters of the predefined control law;
    determine parameters of a current control law of engines based on said Lagrange multipliers and by deriving a parameter representative of an effect of the engines on said real trajectory; and
    control the engines based on said parameters of the current control law.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7246775 B
- US 6845950 B

- EP 1076005 A